# EUROPÄISCHE PATENTSCHRIFT

(11) **EP 1 819 439 B1**
(45) Veröffentlichungstag und Bekanntmachung des Hinweises auf die Patenterteilung: **18.11.2009**
(21) Anmeldenummer: 05817407.9
(22) Anmeldetag: 01.12.2005
(51) Int. Cl.: B01J 23/42, B01J 21/06, B01J 35/00, C08L 83/04, C07F 7/14

(54) **VERWENDUNG VON AUF NANOSKALIGEM TITANDIOXID GETRÄGERTE PLATIN-KATALYSATOREN IN DER HYDROSILYLIERUNG UND ZUSAMMENSETZUNGEN ENTHALTEND SOLCHE KATALYSATOREN**
USE OF PLATINUM CATALYSTS THAT ARE SUPPORTED ON NANOSCALE TITANIUM DIOXIDE IN HYDROSILYLATION AND COMPOSITIONS COMPRISING SAID CATALYSTS
UTILISATION DE CATALYSEURS DE PLATINE SUPPORTE PAR DU DIOXYDE DE TITANE A ECHELLE NANOMETRIQUE POUR L'HYDROSILYLATION ET COMPOSITIONS CONTENANT DE TELS CATALYSEURS

(30) Priorität: 09.12.2004 DE 102004059375
(43) Veröffentlichungstag der Anmeldung: 22.08.2007
(73) Patentinhaber: Wacker Chemie AG, 81737 München (DE)
(72) Erfinder: HOFMANN, Marco, 81241 München (DE); EBERLE, Hans-jürgen, 81477 München (DE)
(74) Vertreter: Fränkel, Robert
(86) Internationale Anmeldenummer: PCT/EP2005/012840
(87) Internationale Veröffentlichungsnummer: WO 2006/061138

(56) Entgegenhaltungen:
- EP-A- 0 787 734
- WO-A-97/40102
- DE-C1- 19 857 223
- US-A1- 2003 167 878
- KENNEDY J C ET AL: "Photothermal Heterogeneous Oxidation of Ethanol over Pt/TiO2" JOURNAL OF CATALYSIS, ACADEMIC PRESS, DULUTH, MN, US, Bd. 179, Nr. 2, 25. Oktober 1998 (1998-10-25), Seiten 375-389, XP004447242 ISSN: 0021-9517

## Beschreibung

Die Erfindung betrifft ein Hydrosilylierungsverfahren mit auf nanoskaligem Titandioxid geträgerte Platin-Katalysatoren (Pt/TiO₂-Katalysatoren) und Zusammensetzungen enthaltend solche Katalysatoren.

Die Addition von Si-H-funktionellen Verbindungen an Verbindungen mit aliphatischen ungesättigten Bindungen, insbesondere C=C-Doppelbindungen (Hydrosilylierung) ist bereits lange bekannt.

Über die Hydrosilylierung können Si-haltige organische Verbindungen, Organosilane und Organopolysiloxane hergestellt werden. Sie wird insbesondere in der additionsvernetzenden Aushärtung von Organopolysiloxanen in der Silikonindustrie verwendet, beispielsweise zur Herstellung von Elastomeren, Abformmassen in der Dentalindustrie oder von anti-adhäsiven Beschichtungen in der Papier- und Folienindustrie.

Als Katalysatoren für die Hydrosilylierungsreaktion werden am häufigsten Platin und seine Verbindungen verwendet, wobei das Platin entweder in metallischer Form, als auf einem anorganischen Träger fixiertes Metall, als Platinsalz oder in Form eines gegebenenfalls löslichen Platinkomplexes eingesetzt wird.

Bis heute wird für den Großteil der industriell durchgeführten Hydrosilylierungsreaktionen der aus US3715334 und US3775452 bekannte sog. "Karstedt-Katalysator" verwendet, ein dimerer Platin-Tetramethyl-divinyl-disiloxan-Komplex, beschreibbar durch die Formel [Pt₂(TMDVS)₃] (TMDVS = Tetramethyl-divinyl-disiloxan). Der Karstedt-Katalysator wird ausgehend von Hexachloroplatinsäure H₂PtCl₆ hergestellt, die ebenfalls häufig als Hydrosilylierungskatalysator eingesetzt wird.

Aus dem Stand der Technik sind auch Platin-katalysierte Hydrosilylierungsreaktionen bekannt, wobei eine Aktivierung mittels UV- und/oder sichtbarem Licht erfolgt. Als photo-aktive Platin-Verbindungen sind beispielsweise aus US4510094 und WO92/10543 CpPtMe₃, aus EP 0398701 Pt(acac)₂, aus US4530879, WO92/10529 und WO92/10544 (COD)PtR₂ , wobei R für einen Aryl-Rest steht, aus WO95/25735 Me₃Pt(O O), wobei O O beispielsweise für Acetylacetonato- oder Tropolonato-Liganden steht und aus WO95/25734 (TMDVS)Pt-L, wobei L allgemein für einen chromophoren Ligand steht, bekannt. Allen diesen Verbindungen ist gemein, dass sie gegebenenfalls in Verbindung mit einem geeigneten Photoinitiator bzw. Photosensibilisierungskatalysator katalytische Aktivität hinsichtlich der Vernetzung von Polysiloxanen bei Raumtemperatur unter Einwirkung von UV- und/oder sichtbarem Licht zeigen. Weiter werden diese Katalysatoren in homogener Phase eingesetzt und zeigen häufig eine höhere Aktivität und Selektivität als vergleichbare heterogen eingesetzte Katalysatoren.

Ein großer verfahrenstechnischer Nachteil homogener Katalysatoren besteht in der Schwierigkeit ihrer Abtrennung vom gebildeten Produkt und/oder vorhandenem Lösungsmittel und der damit verbundenen schwierigen Wiedergewinnung. Ein weiterer Nachteil homogen eingesetzter Hydrosilylierungs-Katalysatoren ist die häufig recht kurze Standzeit, verursacht durch die Bildung katalytisch inaktiver Spezies.

Demgegenüber zeigen geträgerte Pt-Katalysatoren oft niedrigere Aktivitäten bzw. Selektivitäten in der Hydrosilylierung. Sie besitzen als (einfache) heterogene Katalysatoren jedoch den Vorteil, dass sie wesentlich robuster und unempfindlicher sind, dadurch eine längere Standzeit besitzen und auch leichter abgetrennt und wiedergewonnen werden können.

Aus dem Stand der Technik sind auf einem anorganischen Träger fixierte Platin-Katalysatoren für die Hydrosilylierung bekannt, wobei das Trägermaterial häufig Kohlenstoff, beispielsweise in Form von Ruß oder Aktivkohle, darstellt. Solche geträgerten Katalysatoren sind beispielsweise in US 2637738, DE 2815316 und DE 2012229 beschrieben sowie aus P. Boudjouk, B.H. Han, Organometallics 1983, 2, 769-771 bekannt.

Des weiteren wurde auch γ-Al₂O₃ (US 3168544, US 2970150) bereits häufig als Trägermaterial für heterogene Pt-Katalysatoren verwendet.

In EP 0904315 B1 werden heterogene, geträgerte Pt-Katalysatoren auf den Trägern Ruß, Aktivkohle, Al₂O₃, Bariumsilikat sowie Bariumoxid zur Hydrosilylierung von SiH-funktionellen Polysiloxanen mit C=C-funktionellen Epoxy-Verbindungen beschrieben.
TiO₂-geträgerte Pt-Katalysatoren sind allgemein schon lange bekannt, z. B. aus DE 3340569 zur Herstellung von Synthesegas bzw. H₂, aus EP 201670 zur Methanolkonversion, aus EP 730906 als Oxidationskatalysator, aus DE 19905838 als Hydrierkatalysator, oder aus WO 01041926 als Hydrooxidationskatalysator.

Die Verwendung TiO₂-geträgerter Pt-Katalysatoren für die Hydrosilylierung wurde bereits in DE 19857223 bezüglich eines Verfahrens zur Herstellung von 3-funktionalisierten Propylsilanen durch Hydrosilylierung von Allylchlorid mit SiH-funktionellen Silanen in Gegenwart eines geträgerten Multielementkatalysators, bei dem ein Element Platin ist, beschrieben. Aus US 6177585 ist ein Verfahren zur Hydrosilylierung von SiH-funktionellen Silanen mit C=C-funktionellen Verbindungen in Gegenwart von geträgerten bimetallischen Katalysatoren, enthaltend Platin, auf einem Träger aus Titandioxid beschrieben.

EP 0787734 offenbart ein Verfahren zur Hydrosilylierung wobei ein Katalysator eingesetzt wird, welcher erhalten wird durch Kontaktieren von TiO₂ mit einer spezifischen Oberfläche von 330 m²/g mit einer wässrigen H₂PtCl₆ Lösung und Trocknung bei 110°C.

Auch DE 19857223 offenbart ein Verfahren zur Hydrosylilierung in Anwesenheit von Platin enthaltenden Katalysatoren auf einem Träger aus Titandioxid.

Alle bisher aus dem Stand der Technik bekannten geträgerten Platin-Hydrosilylierungskatalysatoren zeigen jedoch insbesondere für Anwendungen, bei denen ein besonders schneller Reaktionsablauf benötigt wird, eine zu geringe Aktivität. Weiter sind die bislang aus dem Stand der Technik für Hydrosilylierungsreaktionen eingesetzten TiO₂-geträgerten Platinkatalysatoren Mischmetallkatalysatoren.
Es stellte sich somit die Aufgabe, einen weiteren Hydrosilylierungskatalysator bereit zu stellen, der eine höhere Aktivität als die bisher aus dem Stand der Technik bekannten heterogenen Katalysatoren besitzt.

Die Aufgabe wird gelöst durch die Verwendung eines auf nanoskaligem Titandioxid (TiO₂) geträgerten heterogenen Platin-Katalysators als Katalysator in der Hydrosilylierung, sowie ein Hydrosilylierungsverfahren in Gegenwart solcher Katalysatoren.

Die Aufgabe wurde insbesondere gelöst durch Einsatz eines Katalysators, welcher ausgehend von einem TiO₂-Sol und einer Lösung enthaltend Platin erhältlich ist (Pt/TiO₂-Katalysator) und die Verwendung eines solchen Katalysators.

Es wurde überraschend gefunden, dass Katalysatoren auf Basis von nanoskaligem TiO₂-geträgertem Platin Hydrosilylierungen mit hoher Aktivität und Selektivität katalysieren. Weiter wurde überraschend gefunden, dass insbesondere solche heterogene Platin-Katalysatoren, die auf nanoskaligem Titandioxid als Träger basieren, durch Bestrahlung eine weitere Steigerung der Aktivität erfahren können.

Die Verwendung von Katalysatoren, erhältlich durch die Umsetzung eines TiO₂-Sols oder nanoskaligem TiO₂-Pulvers und einer Lösung enthaltend Platin als Hydrosilylierungskatalysatoren, ist bislang im Stand der Technik noch nicht beschrieben worden.

Gleichwohl sind im Stand der Technik bestimmte, nanoskaliges TiO₂ und Platin enthaltende bzw. aus nanoskaligem TiO₂ durch ein Sol-Gel-Verfahren hervorgehende Katalysatoren aus DE 4402873 A1, DE 2830231 A1 und DE 10025964 A1 bekannt.

DE 4402873 A1 offenbart Zusammensetzungen enthaltend Platinpartikel, Polymere und nanoskaliges Titandioxid erhältlich nach einem Sol-Gel-Verfahren.

DE 2830231 A1 offenbart einen Platin enthaltenden Trägerkatalysator, dessen Träger gegebenenfalls ein poröses Gel von Titandioxid, ebenfalls erhalten nach einem Sol-Gel-Verfahren, darstellen kann.

DE 10025964 A1 beschreibt heterogene Katalysatoren basierend auf nanoskaligem magnetisierbarem, unter anderem Titandioxid enthaltenden Trägermaterial mit Platin als katalytisch aktiver Substanz.

Gegenstand der Erfindung ist ein Verfahren zur Hydrosilylierung in Gegenwart eines auf nanoskaligem Titandioxid aufgebrachten Platin-Katalysators, erhältlich durch ein Verfahren enthaltend die Schritte
a) Umsetzung eines Titandioxid-Sols mit einer Lösung enthaltend Platin,
b) Trocknung des gemäß Schritt a) erhaltenen Produkts,
c) Calcinierung des nach Schritt b) erhaltenen Produkts und
d) Reduktion des nach Schritt c) erhaltenen Produkts,
wobei in dem eingesetzten Titandioxid-Sol die mittlere Teilchengröße in einem Bereich zwischen 10 - 100 nm liegt und der Feststoffgehalt 10 - 30 % beträgt.

Die Lösung enthaltend Platin wird dabei bevorzugt durch das Lösen eines Platin-Salzes oder einer Platinverbindung erhalten, insbesondere ist die Lösung eine Lösung eines Platin-Salzes.

Die für die Herstellung des erfindungsgemäßen Katalysators eingesetzte Titandioxid-Komponente ist vorzugsweise ein TiO₂-Sol.

Die Umsetzung gemäß Schritt a) erfolgt dabei vorzugsweise ausschließlich in Gegenwart der Titandioxid- und der Platin- Komponente gegebenenfalls in Anwesenheit eines Lösungsmittels, vorzugsweise Wasser.

Ein weiterer Gegenstand der Erfindung ist demnach die Verwendung von auf nanoskaligem Titandioxid als Träger aufgebrachten Platins als Katalysator für die Hydrosilylierung, insbesondere solche Katalysatoren bestehend aus Platin auf einem Träger aus nanoskaligem Titandioxid oder Katalysatoren erhältlich durch die Umsetzung eines Titandioxid-Sols oder nanoskaligen Titandioxid-Pulvers mit einer Lösung enthaltend Platin.

Ein weiterer Gegenstand der Erfindung ist ein Verfahren zur Hydrosilylierung in Gegenwart eines auf nanoskaligem Titandioxid aufgebrachten Platin-Katalysators. Bevorzugt wird dabei ein Katalysator bestehend aus Platin auf einem Träger aus nanoskaligem Titandioxid eingesetzt, insbesondere ein Katalysator erhältlich durch die Umsetzung eines Titandioxid-Sols mit einer Lösung enthaltend Platin.

Unter Hydrosilylierung wird dabei die gegebenenfalls thermisch induzierte Umsetzung (Addition) einer Verbindung mit wenigstens einer Silizium-Wasserstoff-Bindung mit einer Verbindung mit wenigstens einer aliphatisch ungesättigten Kohlenstoff-Kohlenstoffbindung verstanden. Der Begriff Hydrosilylierung bedeutet hierin insbesondere die Addition, gegebenenfalls unter zusätzlicher Zufuhr von Wärmeenergie (thermische Addition) von Silizium-gebundenen Wasserstoff enthaltenden Siliziumverbindungen, beispielsweise SiH-funktionellen Polysiloxanen oder SiH-funktionellen Organosilanen, an eine Verbindung, die mindestens eine aliphatische Mehrfachbindung enthält, insbesondere eine olefinische oder azetylenisch ungesättigte Stelle aufweist.

Gegenstand der Erfindung ist auch ein Verfahren für die Additionsreaktion einer Verbindung enthaltend mindestens ein siliziumgebundenes Wasserstoffatom an eine Verbindung mit mindestens einer aliphatischen ungesättigten Stelle in Gegenwart eines auf nanoskaligem Titandioxid aufgebrachten Platin-Katalysators.

Wesentliches Kennzeichen der Katalysatoren ist die Tatsache, dass Platin, ein Platinsalz und/oder eine Platinverbindung auf nanoskaligem Titandioxid als Träger aufgebracht wird.

Des weiteren wurde gefunden, dass durch zusätzliche Bestrahlung mit einer Strahlungsquelle, insbesondere einer UV-Strahlungsquelle die gewünschte katalysierte Reaktion noch weiter beschleunigt werden kann. Die ohnehin hohe Aktivität von TiO₂-geträgertem Platin als Katalysator für die Hydrosilylierung kann zusätzlich durch Bestrahlung mit einer Strahlungsquelle, insbesondere mit einer UV-Strahlungsquelle noch weiter erhöht werden.

Gegenstand der Erfindung ist demnach auch ein Verfahren für die strahlungsaktivierte Additionsreaktion einer Verbindung enthaltend mindestens ein siliziumgebundenes Wasserstoffatom an eine Verbindung mit mindestens einer aliphatischen ungesättigten Stelle in einer Reaktionsmischung in Gegenwart eines auf nanoskaligem Titandioxid als Träger aufgebrachten Platin-Katalysators und dass das Reaktionsgemisch zusätzlich einer Strahlung ausgesetzt wird.

Hinsichtlich bevorzugter Ausführungsformen der Verbindungen (Reaktanden) zur Durchführung des erfindungsgemäßen Verfahrens wird auf die unten im Detail beschriebenen Komponenten der ebenfalls erfindungsgemäßen Zusammensetzungen verwiesen.

In einer besonders vorteilhaften Ausführungsform des erfindungsgemäßen Verfahrens unter zusätzlicher Bestrahlung werden die erfindungsgemäßen Katalysatoren, erhältlich durch die Umsetzung eines Titandioxid-Sols, mit einer Lösung enthaltend Platin eingesetzt. Diese Katalysatoren zeigen eine besonders hohe zusätzliche Aktivierbarkeit durch Bestrahlung. Titandioxid-geträgerte Platin-Katalysatoren, die nicht unter Verwendung eines Titandioxid-Sols oder nanoskaligen Titandioxid-Pulvers hergestellt werden, zeigen ebenfalls katalytische Aktivität in der Hydrosilylierung. Die Aktivierbarkeit durch Bestrahlung ist hier jedoch nahezu vernachlässigbar.

Die zur weiteren Aktivierung eingesetzte Strahlung ist insbesondere aktinische Strahlung, beispielsweise ultraviolette Strahlung oder Strahlung im sichtbaren Bereich mit einer Wellenlänge von 200 nm bis 800 nm, bevorzugt unter 400 nm.

Als besonders geeignete UV-Strahlungsquellen kommen solche Strahlungsquellen in Betracht, die unter 400 nm emittieren, so insbesondere Nieder-, Mittel- und Hochdruck-QuecksilberDampflampen oder "black lights", wie die UV-Handlampe UVHAND 250 von Dr. Hönle.

Die bereits aus dem Stand der Technik bekannte Aktivierung homogener Platin-Hydrosilylierungskatalysatoren durch Bestrahlung wurde für auf einem anorganischen Träger fixierte, metallische Platin-Hydrosilylierungskatalysatoren bislang noch nicht beschrieben. Die UV-Aktivierung von Hydrosilylierungsreaktionen bei denen TiO₂-geträgertes Platin als Katalysator eingesetzt wird, ist besonders vorteilhaft. Das erfindungsgemäße Hydrosilylierungsverfahren zeichnet sich allgemein durch die hohe Aktivität und Selektivität der zugrunde liegenden Platin-Katalysatoren aus. Diese als Hydrosilylierungskatalysatoren erstmals eingesetzten Katalysatoren vereinen die Vorteile von heterogenen Katalysatoren, wie die Beständigkeit, die leichte Abtrennbarkeit und die Wiedergewinnbarkeit als auch die von homogenen Katalysatoren bekannte hohe Aktivität und weitere Aktivierbarkeit durch Bestrahlung, insbesondere durch UV-Strahlung, auf sich.

Die in dem erfindungsgemäßen Verfahren eingesetzten Katalysatoren bzw. die in den erfindungsgemäßen Zusammensetzungen eingesetzten Katalysatoren können prinzipiell in allen Hydrosilylierungsreaktionen, die aus dem Stand der Technik bekannt sind und beispielsweise in Walter Noll "Chemie und Technologie der Silicone", Verlag Chemie GmbH, Weinheim/Bergstr. 1968; Bogdan Marciniec, "Comprehensive Handbook on Hydrosilylation", Oxford: Pergamon Press, 1992 beschrieben sind bzw. in allen aus dem Stand der Technik bekannten hydrosilylierbaren, insbesondere vernetzbaren Zusammensetzungen, eingesetzt werden.

Das Verfahren ist sowohl für die Synthese niedermolekularer Verbindungen als auch für das Härten höhermolekularer Verbindungen anwendbar, insbesondere von Polymeren mit ungesättigten Gruppen, insbesondere mit Kohlenstoff-KohlenstoffDoppelbindungen.

Insbesondere werden solche Hydrosilylierungsreaktionen katalysiert, in denen C=C-funktionelle Polysiloxane mit SiH-funktionellen Polysiloxanen oder von C=C-funktionellen Organosilanen mit SiH-funktionellen Organosilanen umgesetzt werden.

Bevorzugt sind vor allem die Umsetzung von vinyl-endständigen Polydimethylsiloxanen mit SiH-funktionellen Polysiloxanen der allgemeinen Formel Me₃SiO- [Si (H) (Me) O]ₓ-SiMe₃, wobei x für eine Zahl von 1 bis 500 steht, insbesondere für 1 bis 100 sowie von Si-Vinyl-funktionellen Organosilanen mit Si-H-funktionellen Organosilanen.

Als konkrete Beispiele für Si-vinyl-funktionelle Organosilane, die nach dem erfindungsgemäßen Verfahren hydrosilyliert werden können, seien genannt Vinyltrimethyl-silan, Vinyltriethoxysilan, Vinyl-methyl-diethoxysilan, Vinyl-methyldimethoxysilan, Vinyltrichlorsilan.

Als konkrete Beispiele für SiH-funktionelle Organosilane seien genannt HSi(OR')₃, wobei R' für einen Alkyl-Rest steht, HSi (Me)_{3-y}Cl_{y}, wobei y für eine Zahl von 1 bis 3 steht und HSiR "₃, wobei R" für einen Alkyl oder Aryl-Rest steht. Die Erfindung betrifft weiterhin hydrosilylierbare Zusammensetzungen, enthaltend
(A) eine Verbindung mit wenigstens einer aliphatisch ungesättigten Kohlenstoff-Kohlenstoff-Bindung,
(B) eine Verbindung mit wenigstens einer Silizium-Wasserstoff-Bindung und
(D) einen auf nanoskaligem Titandioxid aufgebrachten PlatinKatalysator.

Hydrosilylierbare Zusammensetzungen bedeutet insbesondere vernetzbare Zusammensetzungen.

Bei dem Katalysator (D) handelt es sich bevorzugt um einen Katalysator bestehend aus Platin auf einem Träger aus nanoskaligem Titandioxid, insbesondere um einen Katalysator erhältlich durch die Umsetzung eines Titandioxid-Sols mit einer Lösung enthaltend Platin.

In einer bevorzugten Ausführungsform der hydrosilylierbaren Zusammensetzungen handelt es sich um Polyorganosiloxanmassen, enthaltend
(A) Polyorganosiloxane, die Reste mit aliphatischen Kohlenstoff-Kohlenstoff-Mehrfachbindungen aufweisen,
(B) Polyorganosiloxane mit Si-gebundenen Wasserstoffatomen oder anstelle von (A) und (B)
(C) Polyorganosiloxane, die SiC-gebundene Reste mit aliphatischen Kohlenstoff-Kohlenstoff-Mehrfachbindungen und Si-gebundene Wasserstoffatome aufweisen, und
(D) einen auf nanoskaligem Titandioxid aufgebrachten PlatinKatalysator.

Die zu den hydrosilylierbaren Zusammensetzungen beschriebenen Komponenten (A), (B) bzw. (C) entsprechen den in dem erfindungsgemäßen Verfahren umzusetzenden Verbindungen (Reaktanden). Sowohl den Zusammensetzungen wie auch dem Verfahren liegen die selben erfindungsgemäßen Titandioxid-geträgerten Platin-Katalysatoren zu Grunde, insbesondere solche, die aus der Umsetzung von TiO₂-Solen mit einer Platin-haltigen Lösung hervorgehen.

Das erfindungsgemäße Verfahren zur Hydrosilylierung wird durch Wärmezufuhr und/oder Energiezufuhr durch Strahlung, insbesondere unter beiden Formen der Energiezufuhr durchgeführt. Gleiches gilt für die erfindungsgemäßen hydrosilylierbaren Zusammensetzungen, in denen das erfindungsgemäße Verfahren unter Einfluss von Wärme und/oder Strahlung durchgeführt wird.

Bevorzugt enthalten solche Zusammensetzungen Verbindungen mit wenigstens einer aliphatisch ungesättigten Kohlenstoff-Kohlenstoff-Bindung, die ausgewählt werden aus der Gruppe enthaltend Vinyl-funktionelle Organosilane und Vinyl-endständige Polydimethylsiloxane und Verbindungen mit wenigstens einer Silizium-Wasserstoff-Bindung, die ausgewählt werden aus der Gruppe enthaltend SiH-funktionelle Polysiloxane und Si-H-funktionelle Organosilane.

Die Erfindung betrifft ebenfalls Siliconelastomere erhältlich durch Vernetzung der oben beschriebenen hydrosilylierbaren Zusammensetzungen, insbesondere der beschriebenen Polyorganosiloxanmassen.

Die Erfindung betrifft ebenfalls mit dem erfindungsgemäßen Verfahren hergestellte Polysiloxan- oder Organosilan-Zusammensetzungen, die beispielsweise zum Herstellen von Dentalabdrücken, Klebstoffen, Release-Liner, Flachdichtungen, Dichtungsmittel und Beschichtungen verwendbar sind.

Die in den erfindungsgemäßen Massen eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist.

Bei der erfindungsgemäß eingesetzten Verbindung (A) kann es sich auch um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln. Beispiele für organische Verbindungen, die in den erfindungsgemäßen Massen als Komponente (A) eingesetzt werden können, sind 1,3,5-Trivinyl-cyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopro-penylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyl-octadien-(1,7), N,N'-Methylen-bis-(acrylsäureamid), 1,1,1-Tris(hydroxy-methyl)-propantriacrylat, 1,1,1-Tris(hydroxymethyl)-propan-trimethacrylat, Tripropylenglykol-diacrylat, Diallylether, Di-allylamin, Diallylcarbonat, N,N'-Diallylharnstoff, Triallyl-amin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykol Diacrylat, Polyethylenglykol Dimethacrylat, Poly-(propylenglykol)methacrylat.

Vorzugsweise enthalten die erfindungsgemäßen Siliconmassen als Bestandteil (A) jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der durchschnittlichen allgemeinen Formel (X)

RₐR¹_{b}SiO_{(4-a-b)/2} (X)

eingesetzt, wobei
R gleich oder verschieden sein kann und einen von aliphatischen Kohlenstoff-Kohlenstoff-Mehrfachbindungen freien, organischen Rest bedeutet,
R¹ gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist
mit der Maßgabe, dass die Summe a + b kleiner oder gleich 3 ist und im Durchschnitt mindestens 2 Reste R¹ je Molekül vorliegen.

Bei Rest R kann es sich um ein- oder mehrwertige Reste handeln, wobei die mehrwertigen Reste, wie bivalente, trivalente und tetravalente Reste, dann mehrere, wie etwa zwei, drei oder vier Siloxy-Einheiten der Formel (X) miteinander verbinden. R umfasst die einwertigen Reste -F, -Cl, -Br, -OR⁶, -CN, -SCN, -NCO und SiC-gebundene, gegebenenfalls substituierte Kohlenwasserstoffreste, die mit Sauerstoffatomen oder der Gruppe - C(O)- unterbrochen sein können, sowie zweiwertige, beidseitig gemäß Formel (X) Si-gebundene Reste. R⁶ steht dabei allgemein für Wasserstoff oder einen einwertigen, gegebenenfalls substituierten Kohlenwasserstoffrest mit 1 bis 20 Kohlenstoffatomen, bevorzugt für Wasserstoff, Alkylreste und Arylreste.

Beispiele für Rest R⁶ sind Alkylreste, wie der Methyl-, Ethyl- , n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n- Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste, Aralkylreste, wie der Benzylrest und der α- und β-Phenylethylrest, sowie Reste der Formel - C (R¹) =CR¹₂ .

Beispiele für halogenierte Reste R⁶ sind Halogenalkylreste, wie der 3,3,3-Trifluor-n-propylrest, der 2,2,2,2',2',2',-Hexafluorisopropylrest, der Heptafluorisopropylrest und Halogenarylreste, wie der o-,m-, und p-Chlorphenylrest.

Bevorzugt handelt es sich bei R⁶ um Wasserstoff, Alkylreste und Arylreste, wobei Wasserstoff, der Methyl- und der Ethylrest besonders bevorzugt sind.

Falls es sich bei Rest R um SiC-gebundene, substituierte Kohlenwasserstoffreste handelt, sind als Substituenten Halogenatome, phosphorhaltige Reste, Cyanoreste, -OR⁶, -NR⁶-, -NR⁶₂, - NR⁶-C(O) -NR⁶₂, -C(O) -NR⁶₂ , -C(O)-R⁶, -C(O)OR⁶, -SO₂-Ph und -C₆F₅ mit R⁶ gleich der oben genannten Bedeutung und Ph gleich Phenylrest bevorzugt.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecyl-rest, und Octadecylreste, wie der n-Octadecylrest, Cycloalkylreste, wie Cyclopentyl-, Cyclohexyl-, Cycloheptyl- und Methyl-cyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β- | Phenylethylrest.

Beispiele für substituierte Reste R sind Halogenalkylreste, wie der 3,3,3-Trifluor-n-propylrest, der 2,2,2,2',2',2'-Hexafluor-isopropylrest, der Heptafluorisopropylrest, Halogenarylreste, wie der o-, m- und p-Chlorphenylrest, -(CH₂)ₙ-N(R⁶)C(O)NR⁶₂, - (CH₂)ₙ-C(O)NR⁶₂, - (CH₂)ₙ -C(O)R⁶, - (CH₂)ₙ-C(O) OR⁶, - (CH₂)ₙ-C(O)NR⁶₂, (CH₂)ₙ-C(O)-(CH₂)ₘ-C(O)CH₃, -(CH₂)n-NR⁶-(CH₂)ₘ-NR⁶₂, -(CH₂)ₙ-O-CO-R⁶, -(CH₂)ₙ-O-(CH₂)ₘ-CH(OH)-CH₂OH, - (CH₂)ₙ- (OCH₂CH₂)ₘ-OR⁶, - (CH₂)ₙ-SO₂-Ph und - (CH₂)ₙ-O-C₆F₅, wobei R⁶ eine oben dafür angegebene Bedeutung hat, n und m gleiche oder verschiedene ganze Zahlen zwischen 0 und 10 sind und Ph den Phenylrest bezeichnet.
Beispiele für R gleich zweiwertige, beidseitig gemäß Formel (X) Si-gebundene Reste sind solche, die sich von den voranstehend für Rest R genannten einwertigen Beispielen dadurch ableiten, dass eine zusätzliche Bindung durch Substitution eines Wasserstoffatoms erfolgt. Beispiele für derartige Reste sind - (CH₂)ₙ-, -CH(CH₃)-, -C(CH₃)₂-, CH(CH₃)-CH₂-, -C₆H₄-, -CH(Ph)-CH₂- , -C(CF₃)₂-, - (CH₂)ₙ-C₆H₄-(CH₂)ₙ-, -(CH₂)ₙ-C₆H₄-C₆H₄-(CH₂)ₙ -, - (CH₂O)ₘ-, -(CH₂CH₂O)ₘ-, -(CH₂)ₙ-Oₓ-C₆H₄-SO₂-C₆H₄-O_{z}-(CH₂)ₙ -, wobei z 0 oder 1 ist, m und n die voranstehend genannte Bedeutung haben sowie Ph gleich Phenylrest ist.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R¹ kann es sich um beliebige, einer Anlagerungsreaktion (Hydrosilylierung) mit einer SiH-funktionellen Verbindung zugängliche Gruppen handeln.

Falls es sich bei Rest R¹ um SiC-gebundene, substituierte Kohlenwasserstoffreste handelt, sind als Substituenten Halogenatome, Cyanoreste und -OR⁶ bevorzugt, wobei R⁶ die oben genannte Bedeutung hat.

Bevorzugt handelt es sich bei Rest R¹ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.
Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,3-Divinyl-tetramethyldisiloxan, handeln, jedoch auch um ein über kettenständige oder endständige Si-gebundene Vinylgruppen verfügendes hochpolymeres Polydimethylsiloxan, z. B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der durchschnittlichen allgemeinen Formel (XI)

R_{c}H_{d}SiO_{(4-c-d)/2} (XI)

eingesetzt, worin
R gleich oder verschieden sein kann und die oben angegebene Bedeutung hat,
c 0, 1, 2 oder 3 ist und
d 0, 1 oder 2 ist,
mit der Maßgabe, dass die Summe von c + d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiHhaltigen Siloxans linear, cyclisch, verzweigt oder auch harzartig, netzwerkartig sein. Lineare und cyclische Polysiloxane sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiH-funktioneller Verbindungen, wie Tetrakis(dimethyl-siloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch
3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, dass das Molverhältnis von SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Massen Organopolysiloxane (C), die aliphatische Kohlenstoff-Kohlenstoff-Mehrfachbindungen und Si-gebundene Wasserstoffatome aufweisen, enthalten, was jedoch nicht bevorzugt ist.

Falls Siloxane (C) eingesetzt werden, handelt es sich vorzugsweise um solche aus Einheiten der Formel

R_{g}SiO_{4-g}/2, RₕR¹SiO_{3-h/2} und RᵢHSiO_{3-i/2},

wobei R und R¹ die oben dafür angegebene Bedeutung haben,
g 0, 1, 2 oder 3 ist,
h 0, 1 oder 2 ist und
i 0, 1 oder 2 ist,
mit der Maßgabe, dass je Molekül mindestens 2 Reste R¹ und mindestens 2 Si-gebundene Wasserstoffatome vorliegen.

Beispiele für Organopolysiloxane (C) sind solche aus SiO_{4/2}-, R₃SiO_{1/2}-, R₂R¹SiO_{1/2}- und R₂HSiO_{1/2}-Einheiten, sogenannte MQ-Harze, wobei diese Harze zusätzlich RSiO_{3/2}- und R₂SiO-Einheiten enthalten können, sowie lineare Organopolysiloxane im wesentlichen bestehend aus R₂R¹SiO_{1/2}-, R₂SiO- und RHSiO-Einheiten mit R und R¹ gleich der obengenannten Bedeutung.

Die Organopolysiloxane (C) besitzen vorzugsweise eine durchschnittliche Viskosität von 0,01 bis 500 000 Pa·s, besonders bevorzugt 0,1 bis 100 000 Pa·s, jeweils bei 25°C.

Organopolysiloxane (C) sind nach in der Chemie gängigen Methoden herstellbar.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei 0 bis 50 Gew.-%.

Die erfindungsgemäßen Zusammensetzungen, insbesondere die Polyorganosiloxanmassen können wahlweise als Bestandteil (F) weitere Zusätze zu einem Anteil von bis zu 70 Gew.-%, vorzugsweise 0,0001 bis 40 Gew.-%, enthalten. Diese Zusätze können z. B. inaktive Füllstoffe, harzartige Polyorganosiloxane, die von den Siloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe, Pigmente usw.

Enthalten sein können des weiteren Zusätze (G), die der gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R₂vinylSiO_{1/2}-Endgruppen, wie Divinyltetramethyldisiloxan, Tetravinyldimethyldisiloxan, Trialkylcyanurate, Alkylmaleate, wie Diallylmaleat, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (G) hängt von ihrer chemischen Struktur ab, so daß sie individuell bestimmt werden muss.

Der Inhibitorgehalt der erfindungsgemäßen Massen beträgt vorzugsweise 0 bis 50 000 ppm, besonders bevorzugt 20 bis 2000 ppm, insbesondere 100 bis 1000 ppm.

Die Herstellung der erfindungsgemäßen Zusammensetzungen, insbesondere der Organopolysiloxanmassen, kann nach bekannten Verfahren erfolgen, wie beispielsweise durch gleichmäßige Vermischung der einzelnen Komponenten. Die Reihenfolge dabei ist beliebig, vorzuziehen ist jedoch die gleichmäßige Vermischung des Platinkatalysators (D) mit einer Mischung aus (A) und (B) bzw. (C), gegebenenfalls (E), (F) und (G). Der erfindungsgemäß eingesetzte Platinkatalysator (D) kann dabei als Festsubstanz oder als sog. Batch - gleichmäßig mit einer geringen Menge (A) oder (A) mit (E) vermischt - eingearbeitet werden. Die Vermischung erfolgt dabei abhängig von der Viskosität von (A) z. B. mit einem Rührer, in einem Dissolver, auf einer Walze oder in einem Kneter.

Die erfindungsgemäßen durch Anlagern von Si-gebundenem Wasserstoff an aliphatische Mehrfachbindung vernetzbaren Massen können unter den gleichen Bedingungen vernetzt werden, wie die bisher bekannten, durch Hydrosilylierungsreaktion vernetzbaren Massen. Vorzugsweise handelt es sich dabei um Temperaturen von 80 bis 220°C, besonders bevorzugt von 130 bis 190°C, und einem Druck von 900 bis 1100 hPa. Es können aber auch höhere oder niedrigere Temperaturen und Drücke angewendet werden. Die Vernetzung kann auch photochemisch mit energiereicher Strahlung, wie z. B. sichtbares Licht mit kurzen Wellenlängen und UV-Licht, oder mit einer Kombination aus thermischer und photochemischer Anregung durchgeführt werden.

Die in dem erfindungsgemäßen Verfahren eingesetzten Katalysatoren bzw. die in den erfindungsgemäßen Zusammensetzungen enthaltenen Katalysatoren werden allgemein ausgehend aus einem TiO₂-Sol und einer Lösung enthaltend Platin, vorzugsweise der Lösung eines Platin-Salzes hergestellt.

Das Verfahren zur Herstellung enthält die folgenden Schritte:
a) Umsetzung eines Titandioxid-Sols oder nanoskaligen Titandioxid-Pulvers mit einer Lösung enthaltend Platin,
b) Trocknung des gemäß Schritt a) erhaltenen Produkts,
c) Calcinierung des nach Schritt b) erhaltenen Produkts und
d) Reduktion des nach Schritt c) erhaltenen Produkts.

Die Herstellung erfolgt vorzugsweise im wässrigen Medium.

Der Katalysator wird dabei unter Verwendung von dem Fachmann bekannten Standardverfahren hergestellt, z. B. durch Tränken bzw. Imprägnieren, Adsorption oder (Co-)Fällung. Bevorzugt ist die Imprägnierung des Trägers mit einer Lösung der katalytisch aktiven Komponente, insbesondere dem Rühren der Komponenten bei Raumtemperatur im wässrigen Medium.

Im Anschluss an die Imprägnierung schließt sich bevorzugt eine Trocknung bei erhöhter Temperatur an, insbesondere bei 80-100°C, anschließend ein Calcinierungsschritt bei 300-600°C, insbesondere bis 450°C und abschließend eine Reduktion.

Geeignete Reduktionsmittel sind alle Stoffe oder Stoffgemische, deren Redoxpotential unterhalb des Redoxpotentials der eingesetzten Platinverbindung liegt, d. h. Stoffe mit einem Standardpotential in wässrigem Medium von kleiner als +0,5 Volt, vorzugsweise jedoch mit einem Standardpotential kleiner als 0 Volt.

Beispiele für geeignete Reduktionsmittel sind Carbonsäuren, wie Ameisensäure, Citronensäure, Milchsäure, Weinsäure sowie deren Alkali-, Erdalkali-, Ammonium- und C1-C10-Alkylammoniumsalze, C1-C10-Alkanole wie Methanol, Ethanol und Isopropanol, Zucker, wie Aldosen und Ketosen in Form von Mono-, Di- und Oligosacchariden, insbesondere Glucose, Fructose und Lactose, Aldehyde, wie Formaldehyd, Borwasserstoffverbindungen bzw. Borhydride, wie Borane, Metallboranate und Borankomplexe, z. B. Diboran, Natriumborhydrid und Aminoborane, insbesondere Trimethylaminboran, Hydrazin und Alkylhydrazine, wie Methylhydrazin, Hydrogendithionite und Dithionite, insbesondere Natrium- und Kaliumhydrogendithionit, Natrium-, Kalium- und Zinkdithionit, sowie H₂.

Bevorzugte Reduktionsmittel sind Ameisensäure, NaBH₄ und/oder Hydrazin sowie H₂.

Geeignet ist auch eine Herstellung des Katalysators über ein Sprühtrocknungsverfahren in einem Sprühtrocknungsapparat. Hierbei steht das Sprücktrocknen für ein Verfahren, bei dem eine Lösung bzw. Aufschlämmung der Katalysatorkomponenten mit einer Düse - oder einer ähnlichen Vorrichtung - in der Verdampfungskammer eines Sprühtrockners zerstäubt wird, und die so entstandenen flüssigen Partikel in Kontakt mit einem Strom eines Trocknungsgases, wie z. B. erhitzte Luft, Stickstoff oder Argon gebracht werden, welches im Gegenstrom oder Gleichstrom in die Verdampfungskammer eingeleitet wird. Die Temperatur des Gasstromes beträgt normalerweise an der Einlassöffnung 250-400°C und an der Auslassöffnung 140-250°C, und die Temperaturdifferenz zwischen Einlass- und Auslassöffnung liegt bei mindestens 40°C.

Als Platin-Ausgangsmaterialien für die Lösung enthaltend Platin können allgemein anorganische Pt(II)- und/oder Pt(IV)-Salze verwendet werden, insbesondere Platin-Salze ausgewählt aus der Gruppe enthaltend H₂PtCl₆, PtCl₂, PtCl₄, (NH₃)₄PtCl₂ und (NH₃)₄Pt(OH)₂ als auch organische oder metallorganische Pt-Verbindungen wie beispielsweise Platinacetylacetonat oder Platin-tetrakis(triphenylphosphan).

Es kann eine beliebig konzentrierte Lösung enthaltend Platin eingesetzt werden, bevorzugt ist eine Lösung mit 0.1-10 Gew-% Platin.

Das Lösungsmittel sollte zweckmäßigerweise so gewählt werden, dass die Platin-Verbindung in dem Lösungsmittel löslich ist.

Geeignet außer Wasser sind organische Lösungsmittel, wie lineare oder verzweigte C₁-C₁₀-Alkanole, z. B. Methanol, Ethanol, Isopropanol, mehrwertige Alkohole, wie Ethylenglykol, Polyether, wie Dimethoxyethan, Polyetherglykole, Ketone, wie z. B. Aceton, Aldehyde, wie z. B. Propanal, aromatische Kohlenwasserstoffe, wie z. B. Toluol. Besonders bevorzugt ist Wasser.

Das für die Herstellung eingesetzte TiO₂-Sol zeichnet sich dadurch aus, dass die mittlere Teilchengröße in einem Bereich zwischen 10-100 nm liegt, bevorzugt zwischen 10-50 nm, insbesondere 10-30 nm, und der Feststoffgehalt 10-30 % beträgt.

Der Platin-Anteil (Platin-Gehalt) des Katalysators kann zwischen 0.01 und 10 Gew.-% variieren, bevorzugt liegt er zwischen 0.1 und 2 Gew.-%, insbesondere zwischen 0.1 und 1 Gew.-%.

Die BET-Oberfläche des Katalysators liegt im allgemeinen zwischen 20-500 m²/g, bevorzugt zwischen 50-250 m²/g.
Die vorgenannten charakteristischen und vorteilhaften Parameter der TiO₂-geträgerten Platin-Katalysatoren gelten gleichermaßen für die in dem erfindungsgemäßen Verfahren eingesetzten wie auch für die in den erfindungsgemäßen Zusammensetzungen enthaltenen TiO₂-geträgerten Platin-Katalysatoren.

Der in dem erfindungsgemäßen Verfahren oder der erfindungsgemäßen Zusammensetzung eingesetzte Gesamtgehalt an Platin beträgt vorzugsweise 1-500 ppm, besonders bevorzugt 20-200 ppm, der an TiO₂ vorzugsweise 0,5-10 %.

Die erfindungsgemäßen durch Anlagern von Si-gebundenem Wasserstoff an aliphatische Mehrfachbindung vernetzbaren Massen können unter den gleichen Bedingungen vernetzt werden, wie die bisher bekannten durch Hydrosilylierungsreaktion vernetzbaren Massen.

Das erfindungsgemäße Verfahren bzw. die Hydrosilylierung bzw. Vernetzung der erfindungsgemäßen Zusammensetzungen wird im allgemeinen in einem Temperaturbereich zwischen 50 - 200°C, vorzugsweise bei 100-200°C, insbesondere zwischen 140 und 200°C durchgeführt.

Die Vernetzung kann - wie bereits ausgeführt - auch photochemisch mit energiereicher Strahlung, wie z. B. sichtbares Licht mit kurzen Wellenlängen und UV-Licht, oder mit einer Kombination aus thermischer und photochemischer Anregung durchgeführt werden.

Die nachfolgenden Beispiele dienen der Veranschaulichung des erfindungsgemäßen Verfahrens und der erfindungsgemäßen Zusammensetzungen und sind in keinster Weise als Einschränkung zu betrachten.

### Beispiele

### Herstellung geträgerter Pt-Katalysatoren

### Vergleichsbeispiel 1 (Herstellung Pt auf Al₂O₃ (Spheralite 531 P3 ) ) :

1.44 g einer wässrigen Lösung von (NH₃)₄Pt(OH)₂ werden mit 35 ml H₂O (destilliert) verdünnt und mit 7.8 g Al₂O₃ (P3; mittlere Teilchengröße 8.9 µm, BET 115 m²/g) 1.5 h bei Raumtemperatur gerührt. Danach wird abzentrifugiert, das erhaltene Pulver bei 80°C im Trockenschrank getrocknet und anschließend 5 h bei 450°C calciniert. 2.9 g des resultierenden Pulvers werden in einem Zweihalskolben mit Innenthermometer, Rückflusskühler und aufgesetztem Blasenzähler mit einer Lösung von 8.7 g HCOOH (85 %) in 150 ml H₂O versetzt und bei 45 - 50°C gerührt, bis keine Gasentwicklung mehr feststellbar ist (4 - 5 h). Nach dem Abkühlen wird die überstehende Lösung abdekantiert, das verbleibende Pulver wird abzentrifugiert und bei 65°C 4 h im Trockenschrank getrocknet. Es resultiert ein Pt/Al₂O₃-Pulver mit einem Pt-Gehalt von 1.23 % Pt und einer BET-Oberfläche von 99.0 m²/g.

### Vergleichsbeispiel 2 (DT 51, Millenium):

1.41 g einer wässrigen Lösung von (NH₃)₄Pt(OH)₂ werden mit 35 ml H₂O (destilliert) verdünnt und mit 7.5 g TiO₂ (DT 51; mittlere Teilchengröße 1.2 µm, BET 90 ± 10 m²/g) 1.5 h bei Raumtemperatur gerührt. Danach wird abzentrifugiert, das erhaltene Pulver bei 80°C im Trockenschrank getrocknet und anschließend 5 h bei 450°C calciniert. 3.1 g des resultierenden Pulvers werden in einem Zweihalskolben mit Innenthermometer, Rückflusskühler und aufgesetztem Blasenzähler mit einer Lösung von 9.3 g HCOOH (85 %) in 160 ml H₂O versetzt und bei 45 - 50°C gerührt, bis keine Gasentwicklung mehr feststellbar ist (4 - 5 h). Nach dem Abkühlen wird die überstehende Lösung abdekantiert, das verbleibende Pulver wird abzentrifugiert und bei 65°C 4 h im Trockenschrank getrocknet. Es resultiert ein Pt/TiO₂-Pulver mit einem Pt-Gehalt von 0.78 % Pt und einer BET-Oberfläche von 83.0 m²/g .

Erfindungsgemäßes Beispiel 1 (Herstellung Pt auf TiO₂ (Hombikat XXS100, Sachtleben; 1.90 % Pt)):

Eine Mischung aus 40.0 g TiO₂-Nanosol (Hombikat XXS100, mittlere Teilchengröße 20 - 25 nm, wässriges TiO₂-Nanosol mit Salpetersäure, pH 1, Feststoffgehalt 18 %) und 956 mg (NH₃)₄Pt(OH)₂ wird 1.5 h bei Raumtemperatur gerührt und anschließend 72 h bei 80°C im Trockenschrank getrocknet. Die entstandenen Kristalle werden im Mörser fein zermahlen und 5 h bei 450°C calciniert. 4.8 g des resultierenden Pulvers werden in einem Zweihalskolben mit Innenthermometer, Rückflusskühler und aufgesetztem Blasenzähler mit einer Lösung von 14.4 g HCOOH (85 %) in 250 ml H₂O versetzt und bei 45 - 50°C gerührt, bis keine Gasentwicklung mehr feststellbar ist (4 - 5 h). Nach dem Abkühlen wird die überstehende Lösung abdekantiert, das verbleibende Pulver wird abzentrifugiert und bei 65°C 4 h im Trockenschrank getrocknet. Es resultieren 5.5 g eines Pt/TiO₂-Pulvers mit einem Pt-Gehalt von 1.90 % Pt und einer BET-Oberfläche von 92.0 m²/g.

### Erfindungsgemäßes Beispiel 2:

### Herstellung Pt auf TiO₂ (Hombikat XXS100, Sachtleben), 0.17 % Pt

Eine Mischung aus 40.0 g TiO₂-Nanosol (Hombikat XXS100, mittlere Teilchengröße 20 - 25 nm, wäßriges TiO₂-Nanosol mit Salpetersäure, pH 1, Feststoffgehalt 18 %) und 95 mg (NH₃)₄Pt(OH)₂ wird 1.5 h bei Raumtemperatur gerührt, anschließend 72 h bei 80°C im Trockenschrank getrocknet. Die entstandenen Kristalle werden im Mörser fein zermahlen und 5 h bei 450°C calciniert. Es resultieren 4.6 g eines Pt/TiO₂-Pulvers.
2.6 g dieses Pt/TiO₂-Pulvers werden in einem Zweihalskolben mit Innenthermometer, Rückflusskühler und aufgesetztem Blasenzähler mit einer Lösung von 7.8 g HCOOH (85 %) in 135 ml H₂O versetzt und bei 45 - 50 °C gerührt, bis keine Gasentwicklung mehr feststellbar ist (4 - 5 h). Nach dem Abkühlen wird die überstehende Lösung abdekantiert, das verbleibende Pulver wird abzentrifugiert und bei 65°C 4 h im Trockenschrank getrocknet. Es resultiert ein Pt/TiO₂-Pulver mit einem Pt-Gehalt von 0.17 % und einer BET-Oberfläche von 83.6 m²/g.

### Allgemeine Beschreibung der Testreaktionen

### a) Katalytische Testreaktionen ohne Bestrahlung

Eine Mischung aus DEHESIVE 920^{®} emulgiert (α,ω-Divinyldimethylpolysiloxan, Viskosität η = 500 mPa s, Feststoffgehalt 54,6 %), SiH-Vernetzer V72 (emulgiertes H-funktionelles Polysiloxan der Formel Me₃SiO- [Si (H) Me-O]₄₈-SiMe₃, Feststoffgehalt 37 %) und einem heterogenen Pt-Katalysator wird mit Hilfe eines Rakels (24 µ) bzw. eines Spatels auf einen Glasobjektträger aufgezogen und auf einer Heizbank solange bei einer gegebenen Temperatur behandelt, bis mit einem "Strichtest" keine schmierenden Anteile mehr festgestellt werden können.

### b) Katalytische Testreaktionen unter zusätzlicher UV-Bestrahlung

Analog zu a) wird eine Mischung aus DEHESIVE 920^{®} emulgiert, emulgiertes H-funktionelles Polysiloxan der Formel Me₃SiO-[Si(H)Me-O]₄₈-SiMe₃ (SiH-Vernetzer V72) und einem heterogenen Pt-Katalysator mit Hilfe eines Rakels (24 µ) bzw. eines Spatels auf einen Glasobjektträger aufgezogen und auf einer Heizbank mit einer zusätzlichen UV-Lampe in 10 cm Abstand (UV-Handlampe Dr. Hönle UVAHand 250, Strahlungsintensität in 10 cm Abstand 10.5 mW/cm², λₘₐₓ≈ 362 nm) solange bei einer gegebenen Temperatur behandelt, bis mit einem "Strichtest" keine schmierenden Anteile mehr festgestellt werden können.

### Vergleichsbeispiel 3 (Pt/Al₂O₃-Katalysator) :

Ein Gemisch aus 10.0 g DEHESIVE 920^{®} emulgiert und 0.6 g Vernetzer V72 wird mit 42 mg (49 ppm Pt) des Pt/Al₂O₃-Katalysators aus dem Vergleichsbeispiel 1 versetzt, 10 min. im Ultraschallbad behandelt, nochmals intensiv gerührt und gemäß den Methoden a) und b) getestet.

| Temperatur | Testreaktion a) | Testreaktion b) |
|---|---|---|
| 160°C | > 20 min. | > 20 min. |
| 180°C | > 20 min. | > 20 min. |
| 200°C | 7 min. | 7 min. |

### Vergleichsbeispiel 4 (Pt/C-Katalysator, 1 % Pt) :

Ein Gemisch aus 10.0 g DEHESIVE 920^{®} emulgiert und 0.6 g Vernetzer V72 wird mit 54 mg (51 ppm Pt) Pt/C (1 % Pt, kommerzieller Katalysator) versetzt, 10 min. im Ultraschallbad behandelt, nochmals intensiv gerührt und gemäß den Methoden a) und b) getestet.

| Temperatur | Testreaktion a) | Testreaktion b) |
|---|---|---|
| 160 °C | > 10 min. | > 10 min. |
| 180 °C | 9 min. 20 | 9 min. 20 |
| 200 °C | 7 min. 10 | 7 min. 10 |

### Vergleichsbeispiel 5 (Pt/C-Katalysator, 10 % Pt):

Ein Gemisch aus 10.0 g DEHESIVE 920^{®} emulgiert und 0.6 g Vernetzer V72 wird mit 5.4 mg (51 ppm Pt) Pt/C (10 % Pt, kommerzieller Katalysator) versetzt, 10 min. im Ultraschallbad behandelt, nochmals intensiv gerührt und gemäß den Methoden a) und b) getestet.

| Temperatur | Testreaktion a) | Testreaktion b) |
|---|---|---|
| 160 °C | > 10 min. | > 10 min. |
| 180 °C | > 10 min. | > 10 min. |
| 200 °C | 10 min. | 10 min. |

Erfindungsgemäßes Beispiel 3 (Pt/TiO₂ 0.17%; keine Bestrahlung; Gesamt-Pt-Gehalt 50 ppm):

Ein Gemisch aus 5 g DEHESIVE 920^{®} emulgiert und 0.3 g Vernetzer V72 wird mit 160 mg (50 ppm Pt) des Katalysators aus dem erfindungsgemäßen Beispiel 2 (Pt/TiO₂ 0.17%) versetzt, 10 min. im Ultraschallbad behandelt, nochmals intensiv gerührt und gemäß Methode a) getestet.

Der Gesamt-Pt-Gehalt beträgt 50 ppm, der TiO₂-Gehalt 2.93 %.

| Temperatur | Testreaktion a) |
|---|---|
| 140 °C | > 10 min. |
| 160 °C | 8 min. 10 s |
| 180 °C | 2 min. 50 s |
| 200 °C | 1 min. 10 s |

Ohne Katalysator erfolgt bei 200°C auch nach 10 min. keinerlei Vernetzung.

Das erfindungsgemäße Beispiel 3 belegt grundsätzlich die höhere Aktivität der in dem erfindungsgemäßen Verfahren eingesetzten Katalysatoren im Vergleich zu anderen geträgerten Pt-Katalysatoren.

Erfindungsgemäßes Beispiel 4 (Pt/TiO₂ 0.17%; keine Bestrahlung; Gesamt-Pt-Gehalt 97 ppm):

Ein Gemisch aus 5 g DEHESIVE 920^{®} emulgiert und 0.3 g Vernetzer V72 wird mit 320 mg (97 ppm Pt) des Katalysators aus dem erfindungsgemäßen Beispiel 2 (Pt/TiO₂ 0.17%) versetzt, 10 min. im Ultraschallbad behandelt, nochmals intensiv gerührt und gemäß Methode a) getestet.
Der Gesamt-Pt-Gehalt beträgt 97 ppm, der TiO₂-Gehalt 5.68 %.

| Temperatur | Testreaktion a) |
|---|---|
| 140 °C | 7 min. |
| 160 °C | 5 min. 20 s |
| 180 °C | 1 min. 40 s |
| 200 °C | 55 s |

Erfindungsgemäßes Beispiel 5a (Pt/TiO₂ 0.17%; mit UV-Bestrahlung; Gesamt-Pt-Gehalt 97 ppm):

Ein Gemisch aus 5 g DEHESIVE 920^{®} emulgiert und 0.3 g Vernetzer V72 wird mit 320 mg (97 ppm Pt) des Katalysators aus dem erfindungsgemäßen Beispiel 2 (Pt/TiO₂ 0.17%) versetzt, 10 min. im Ultraschallbad behandelt, nochmals intensiv gerührt und gemäß Methode b) getestet.

Der Gesamt-Pt-Gehalt beträgt 97 ppm, der TiO₂-Gehalt 5.68 %.

| Temperatur | Testreaktion b) |
|---|---|
| 140 °C | 4 min. 40 |
| 160 °C | 3 min. 20 |
| 180 °C | 40 s |
| 200 °C | 35 s |

### Vergleichs-Beispiel 5b (Pt/TiO₂-Katalysator, der nicht unter Verwendung eines TiO₂-Sols hergestellt worden ist):

Ein Gemisch aus 5.0 g DEHESIVE 920^{®} emulgiert und 0.3 g Vernetzer V72 wird mit 34 mg (50 ppm Pt-Gehalt) des Pt/TiO₂-Katalysators aus dem Vergleichsbeispiel 2 versetzt, 10 min. im Ultraschallbad behandelt, nochmals intensiv gerührt uns gemäß den Methoden a) und b) getestet.

| Temperatur | Testreaktion a) | Testreaktion b) |
|---|---|---|
| 160°C | > 20 min | > 20 min |
| 180°C | 10 min 20 s | 10 min |
| 200°C | 5 min 20 s | 5 min 20 s |

Der Pt/TiO₂-Katalysator aus Vergleichsbeispiel 2 zeigt gegenüber den über ein TiO₂-Nanosol hergestellten Katalysatoren eine niedrigere Aktivität. Des weiteren zeigt ein solcher Katalysator keine signifikante Erhöhung der Aktivität ("UV-Effekt") durch Bestrahlung.

### Hydrosilylierung von Organosilanen mit Pt/TiO₂

Erfindungsgemäßes Beispiel 6 (4 h):

Ein Gemisch aus 2.49 g (18.66 mmol) Me(H)Si(OEt)₂ und 279 mg des Pt/TiO₂-Katalysators aus dem erfindungsgemäßen Beispiel 2 (entspricht 82 ppm Pt) wird auf 100°C erhitzt (Ölbadtemperatur 100°C) und tropfenweise mit 3.0 g (18.75 mmol) Me(Vi)Si(OEt)₂ (Vi = Vinyl) versetzt (Zutropfdauer 11 min.). Anschließend wird 4 h bei dieser Temperatur gerührt. Laut GC-Analytik wird das Hydrosilylierungsprodukt Me(OEt)₂Si-CH₂CH₂-Si(OEt)₂Me in einer Ausbeute von 72 % gebildet.

### Erfindungsgemäßes Beispiel 7 (1 h):

Ein Gemisch aus 0.92 g (5.73 mmol) Me(Vi)Si(OEt)₂ (Vi = Vinyl) und 141 mg des Pt/TiO₂-Katalysators aus dem erfindungsgemäßen Beispiel 2 (entspricht 94 ppm Pt) wird auf 100°C erhitzt (Ölbadtemperatur 100°C) und tropfenweise mit 1.5 g (11.11 mmol) Me (H) Si (OEt)₂ versetzt (Zutropfdauer 15 min.) . Anschließend wird 1 h bei dieser Temperatur gerührt. Laut GC-Analytik wird das Hydrosilylierungsprodukt Me (OEt)₂Si-CH₂CH₂-Si (OEt)₂Me in einer Ausbeute von 60 % gebildet.

### Erfindungsgemäßes Beispiel 8 (1h, zusätzlich UV-Bestrahlung):

Der Ansatz aus dem erfindungsgemäßen Beispiel 7 wird wiederholt. Zusätzlich erfolgt die Bestrahlung des Reaktionsansatzes mit einer in 10 cm Abstand fest installierten UV-Strahlungsquelle (UV-Handlampe Dr. Hönle UVAHand 250, Strahlungsintensität in 10 cm Abstand 10.5 mW/cm², λₘₐₓ≈362 nm).

Laut GC-Analytik wird das Hydrosilylierungsprodukt Me(OEt)₂SiCH₂CH₂-Si(OEt)₂Me in einer Ausbeute von 66 % gebildet.

Der Vergleich der Ergebnisse der erfindungsgemäßen Beispiele 7 und 8 verdeutlicht, dass auch bei der Hydrosilylierung von molekularen Silanen ein "UV-Effekt" (Erhöhung der Aktivität) des erfindungsgemäßen Katalysators zu beobachten ist.

### Erfindungsgemäßes Beispiel 9 (1 h):

Ein Gemisch aus 0.92 g (5.73 mmol) Me(Vi)Si(OEt)₂ und 13 mg des Pt/TiO₂-Katalysators aus dem erfindungsgemäßen Beispiel 1 (entspricht 94 ppm Pt) wird auf 100°C erhitzt (Ölbadtemperatur 100°C) und tropfenweise mit 1.5 g (11.11 mmol) Me(H)Si(OEt)₂ versetzt (Zutropfdauer 15 min.). Anschließend wird 1 h bei dieser Temperatur gerührt. Laut GC-Analytik wird das Hydrosilylierungsprodukt Me(OEt)₂Si-CH₂CH₂-Si(OEt)₂Me in einer Ausbeute von 58 % gebildet.

### Erfindungsgemäßes Beispiel 10 (1 h, zusätzlich UV-Bestrahlung):

Der Ansatz aus erfindungsgemäßen Beispiel 9 wird wiederholt. Zusätzlich erfolgt die Bestrahlung des Reaktionsansatzes mit einer in 10 cm Abstand fest installierten UV-Strahlungsquelle (UV-Handlampe Dr. Hönle UVAHand 250, Strahlungsintensität in 10 cm Abstand 10.5 mW/cm², λₘₐₓ≈362 nm). Laut GC-Analytik wird das Hydrosilylierungsprodukt Me (OEt)₂Si-CH₂CH₂-Si(OEt)₂Me in einer Ausbeute von 65 % gebildet.

Auch Vergleich der Ergebnisse der erfindungsgemäßen Beispiele 9 und 10 verdeutlicht, dass bei der Hydrosilylierung von molekularen Silanen ein "UV-Effekt" (Erhöhung der Aktivität) des erfindungsgemäßen Katalysators zu beobachten ist.

## Patentansprüche

1. Verfahren zur Hydrosilylierung in Gegenwart eines auf nanoskaligem Titandioxid aufgebrachten Platin-Katalysators, erhältlich durch ein Verfahren enthaltend die Schritte
a) Umsetzung eines Titandioxid-Sols mit einer Lösung enthaltend Platin,
b) Trocknung des gemäß Schritt a) erhaltenen Produkts,
c) Calcinierung des nach Schritt b) erhaltenen Produkts und
d) Reduktion des nach Schritt c) erhaltenen Produkts,
wobei in dem eingesetzten Titandioxid-Sol die mittlere Teilchengröße in einem Bereich zwischen 10 - 100 nm liegt und der Feststoffgehalt 10 - 30 % beträgt.

2. Verfahren nach Anspruch 1, **dadurch gekennzeichnet, dass** eine Lösung eines Platin-Salzes eingesetzt wird.

3. Verfahren nach Anspruch 1, **dadurch gekennzeichnet, dass** der Platin-Gehalt zwischen 0.1 und 2 Gew.-% beträgt.

4. Verfahren nach einem oder mehreren der Ansprüche 1 bis 3, **dadurch gekennzeichnet, dass** die Umsetzung des Titandioxid-Sols mit einer Lösung enthaltend Platin im wässrigen Medium erfolgt.

5. Verfahren nach einem oder mehreren der Ansprüche 1 bis 4, **dadurch gekennzeichnet, dass** die Hydrosilylierungsreaktion zusätzlich unter Bestrahlung mit einer Strahlungsquelle durchgeführt wird.

6. Verfahren nach Anspruch 5, **dadurch gekennzeichnet, dass** die Strahlungsquelle eine UV-Strahlungsquelle ist.

7. Hydrosilylierbare Zusammensetzungen, enthaltend
(A) eine Verbindung mit wenigstens einer aliphatisch ungesättigten Kohlenstoff-Kohlenstoff-Bindung,
(B) eine Verbindungen mit wenigstens einer Silizium-Wasserstoff-Bindung und
(D) einen auf nanoskaligem Titandioxid aufgebrachten PlatinKatalysator gemäß Anspruch 1.

8. Hydrosilylierbare Zusammensetzungen gemäß Anspruch 7, **dadurch gekennzeichnet, dass** es sich um Polyorganosiloxanmassen handelt, enthaltend
(A) Polyorganosiloxane, die Reste mit aliphatischen Kohlenstoff-Kohlenstoff-Mehrfachbindungen aufweisen,
(B) Polyorganosiloxane mit Si-gebundenen Wasserstoffatomen oder anstelle von (A) und (B)
(C) Polyorganosiloxane, die SiC-gebundene Reste mit aliphatischen Kohlenstoff-Kohlenstoff-Mehrfachbindungen und Si-gebundene Wasserstoffatome aufweisen, und
(D) einen auf nanoskaligem Titandioxid aufgebrachten PlatinKatalysator gemäß Anspruch 1.

9. Zusammensetzungen gemäß Anspruch 7 oder 8, **dadurch gekennzeichnet, dass** der Katalysator entsprechend Komponente (D) erhältlich ist nach einem oder mehreren der Ansprüche 1 bis 6.

10. Zusammensetzungen gemäß einem oder mehreren der Ansprüche 7 bis 9, **dadurch gekennzeichnet, dass** die Verbindungen mit wenigstens einer aliphatisch ungesättigten Kohlenstoff-Kohlenstoff-Bindung gemäß Komponente (A) ausgewählt werden aus der Gruppe enthaltend vinyl-funktionellen Organosilanen und vinyl-endständigen Polydimethylsiloxane und die Verbindungen mit wenigstens einer Silizium-Wasserstoff-Bindung gemäß Komponente (B) ausgewählt werden aus der Gruppe enthaltend SiH-funktionellen Polysiloxane und Si-H-funktionellen Organosilane.

## Claims

1. Process for hydrosilylation in the presence of a platinum catalyst applied to nanosize titanium dioxide, which catalyst can be obtained by a process comprising the steps:
a) reaction of a titanium dioxide sol with a solution containing platinum,
b) drying of the product obtained in step a),
c) calcination of the product obtained in step b) and
d) reduction of the product obtained in step c),
wherein, in the titanium dioxide sol used, the mean particle size is in the range 10 - 100 nm and the solids content is 10 - 30%.

2. Process according to Claim 1, **characterized in that** a solution of a platinum salt is used.

3. Process according to Claim 1, **characterized in that** the platinum content is in the range from 0.1 to 2% by weight.

4. Process according to one or more of Claims 1 to 3, **characterized in that** the reaction of the titanium dioxide sol with a solution containing platinum is carried out in an aqueous medium.

5. Process according to one or more of Claims 1 to 4, **characterized in that** the hydrosilylation reaction is additionally carried out with irradiation by means of a radiation source.

6. Process according to Claim 5, **characterized in that** the radiation source is a UV radiation source.

7. Hydrosilylatable compositions comprising
(A) a compound having at least one aliphatically unsaturated carbon-carbon bond,
(B) a compound having at least one silicon-hydrogen bond and
(D) a platinum catalyst applied to nanosize titanium dioxide according to Claim 1.

8. Hydrosilylatable compositions according to Claim 7, **characterized in that** they are polyorganosiloxane compositions comprising
(A) polyorganosiloxanes which have radicals having aliphatic carbon-carbon multiple bonds,
(B) polyorganosiloxanes having Si-bonded hydrogen atoms or, in place of (A) and (B),
(C) polyorganosiloxanes which have SiC-bonded radicals having aliphatic carbon-carbon multiple bonds and Si-bonded hydrogen atoms, and
(D) a platinum catalyst applied to nanosize titanium dioxide according to Claim 1.

9. Compositions according to Claim 7 or 8,
**characterized in that** the catalyst corresponding to component (D) is obtainable according to one or more of Claims 1 to 6.

10. Compositions according to one or more of Claims 7 to 9, **characterized in that** the compounds having at least one aliphatically unsaturated carbon-carbon bond of component (A) are selected from the group consisting of vinyl-functional organosilanes and vinyl-terminated polydimethylsiloxanes and the compounds having at least one silicon-hydrogen bond of component (B) are selected from the group consisting of SiH-functional polysiloxanes and Si-H-functional organosilanes.

## Revendications

1. Procédé pour l'hydrosilylation en présence d'un catalyseur au platine appliqué sur du dioxyde de titane nanoparticulaire, pouvant être obtenu par un procédé comprenant les étapes
a) mise en réaction d'un sol de dioxyde de titane avec une solution contenant du platine,
b) séchage du produit obtenu selon l'étape a),
c) calcination du produit obtenu après l'étape b) et
d) réduction du produit obtenu après l'étape c) ;
la taille moyenne de particule dans le sol de dioxyde de titane utilisé se situant dans une plage comprise entre 10 et 100 nm et la teneur en matière solide allant de 10 à 30 %.

2. Procédé selon la revendication 1, **caractérisé en ce qu'**on utilise une solution d'un sel de platine.

3. Procédé selon la revendication 1, **caractérisé en ce que** la teneur en platine est comprise entre 0,1 et 2 % en poids.

4. Procédé selon une ou plusieurs des revendications 1 à 3, **caractérisé en ce que** la réaction du sol de dioxyde de titane avec une solution contenant du platine s'effectue en milieu aqueux.

5. Procédé selon une ou plusieurs des revendications 1 à 4, **caractérisé en ce que** la réaction d'hydrosilylation est effectuée en outre sous irradiation par une source de rayonnement.

6. Procédé selon la revendication 5, **caractérisé en ce que** la source de rayonnement est une source de rayonnement UV.

7. Compositions susceptibles d'hydrosilylation, contenant
(A) un composé comportant au moins une liaison carbone-carbone à insaturation aliphatique,
(B) un composé comportant au moins une liaison silicium-hydrogène et
(D) un catalyseur au platine appliqué sur du dioxyde de titane nanoparticulaire selon la revendication 1.

8. Compositions susceptibles d'hydrosilylation selon la revendication 7, **caractérisées en ce qu'**il s'agit de matières à base de polyorganosiloxanes, contenant
(A) des polyorganosiloxanes qui comportent des radicaux comportant des liaisons multiples carbone-carbone aliphatiques ;
(B) des polyorganosiloxanes comportant des atomes d'hydrogène liés à Si ou, au lieu de (A) et (B),
(C) des polyorganosiloxanes qui comportent des radicaux liés par une liaison SiC, comportant des liaisons multiples carbone-carbone aliphatiques, et qui comportent des atomes d'hydrogène liés à Si, et
(D) un catalyseur au platine appliqué sur du dioxyde de titane nanoparticulaire selon la revendication 1.

9. Compositions selon la revendication 7 ou 8, **caractérisées en ce que** le catalyseur correspondant au composant (D) peut être obtenu selon une ou plusieurs des revendications 1 à 6.

10. Compositions selon une ou plusieurs des revendications 7 à 9, **caractérisées en ce que** les composés comportant au moins une liaison carbone-carbone à insaturation aliphatique selon le composant (A) sont choisis dans le groupe contenant des organosilanes à fonction vinyle et des polydiméthylsiloxanes à terminaison vinyle et les composés comportant au moins une liaison silicium-hydrogène selon le composant (B) sont choisis dans le groupe contenant des polysiloxanes à fonction SiH et des organosilanes à fonction Si-H.
